Europäisches Patentamt

European Patent Office

Office européen des brevets

(19)

(11) Numéro de publication : **0 196 255 B1**

(12) **FASCICULE DE BREVET EUROPÉEN**

(45) Date de publication du fascicule du brevet :
03.01.90

(51) Int. Cl.⁵ : **G 11 B 20/14, H 04 L 7/02, H 03 M 5/04**

(21) Numéro de dépôt : **86400557.4**

(22) Date de dépôt : **17.03.86**

(54) **Procédé d'extraction d'un signal d'horloge synchrone à partir d'un signal codé en simple ou double densité, et dispositif permettant la mise en oeuvre du procédé.**

(30) Priorité : **18.03.85 FR 8503924**

(43) Date de publication de la demande :
**01.10.86 Bulletin 86/40**

(45) Mention de la délivrance du brevet :
**03.01.90 Bulletin 90/01**

(84) Etats contractants désignés :
**BE DE IT**

(56) Documents cités :
DE—A— 3 202 945
FR—A— 2 410 920
FR—A— 2 420 253
GB—A— 2 075 804
US—A— 3 671 873
US—A— 4 307 381
PATENTS ABSTRACTS OF JAPAN, vol. 8, no. 165, 31 juillet 1984, page 61 P 291; & JP - A - 59 60 718 (FUJITSU K.K.) 06-04-1984
PATENTS ABSTRACTS OF JAPAN, vol. 6, no. 9, 20 janvier 1982, page 111 E 90; & JP - A - 56 132 043 (SONY K.K.) 16-10-1981
PATENTS ABSTRACTS OF JAPAN, vol. 8, no. 74, 6 avril 1984, page 9 E 236; & JP - A - 58 220 534 (SHINKO DENKI K.K.) 22-12-1983

(73) Titulaire : **BULL S.A.**
**121, avenue de Malakoff**
**F-75764 Paris Cédex 16 (FR)**

(72) Inventeur : **Nam, Vo Chau**
**7, rue du Grand Vivier**
**F-91120 - Villejust (FR)**

(74) Mandataire : **Debay, Yves et al**
**BULL S.A. Industrial Property Department 25 avenue de la Grande-Armée**
**F-75016 Paris (FR)**

Jouve, 18, rue St-Denis, 75001 Paris, France

EP 0 196 255 B1

## Description

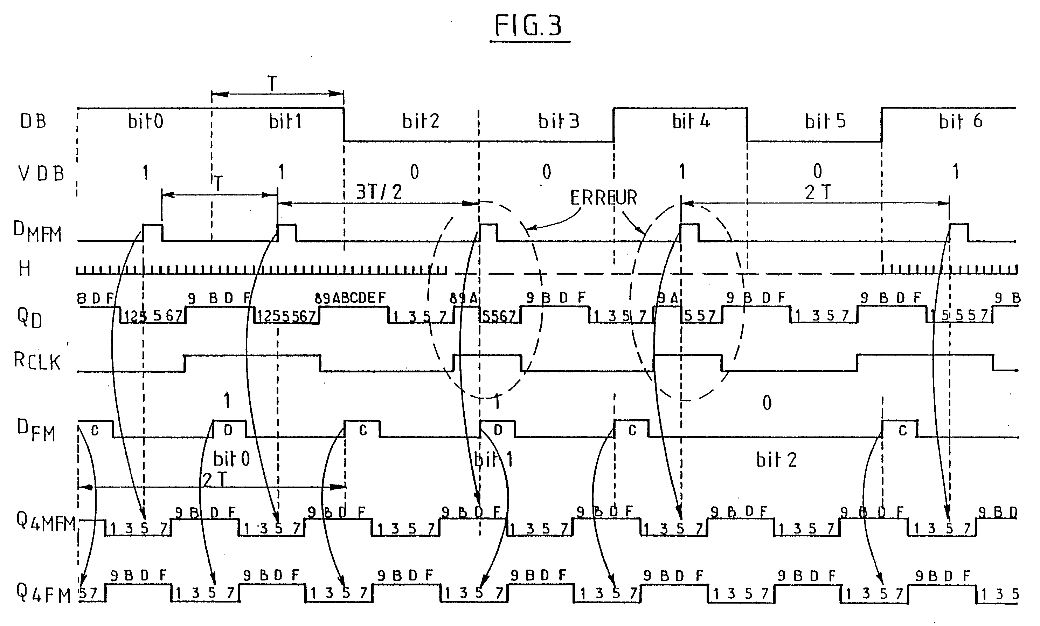

La présente invention concerne un procédé d'extraction d'un signal d'horloge synchrone à partir d'un signal codé en simple ou double densité, et le dispositif permettant la mise en œuvre du procédé. Ce procédé et dispositif peuvent être utilisés soit dans la transmission des signaux soit dans le traitement de signaux émis par un lecteur de disques, ces signaux étant codés en simple densité (c'est-à-dire en modulation de fréquence, FM) ou en double densité (c'est-à-dire en modulation de fréquence modifiée, MFM), avec la même fréquence de modulation F. Cette fréquence étant l'inverse de l'intervalle de temps T (fig. 3) séparant les impulsions les plus rapprochées du signal reçu.

Lorsque l'on reçoit un signal codé en FM ou MFM, il est nécessaire, si l'on veut en extraire le signal représentant les données binaires de générer à partir de ce signal codé un signal d'horloge synchrone permettant d'instaurer une fenêtre qui assurera la distinction, dans le signal codé, des informations représentant une donnée, des autres informations. Ce signal d'horloge est appelée abusivement séparateur de données et l'on connaît des circuits séparateurs de données qui permettent de générer ce signal d'horloge. Toutefois, les circuits de l'état de la technique nécessitent pour fonctionner en FM un oscillateur d'une certaine fréquence et pour fonctionner en MFM un oscillateur d'une fréquence plus élevée. Enfin les circuits de l'état de la technique utilisent la donnée elle-même pour effectuer le chargement du compteur permettant d'assurer la récupération du signal d'horloge. Ces dispositifs présentent l'inconvénient lors de variations de la largeur du signal de données d'entraîner des variations de la période du signal d'horloge correspondant à la donnée ayant subit une variation. Ces variations peuvent être de l'ordre de plus ou moins 20 % et sont équivalentes pour le système à des variations de plus ou moins 5 % sur la vitesse de rotation instantanée.

Le but de l'invention est de proposer un procédé d'extraction du signal d'horloge qui puisse fonctionner indifféremment en FM ou en MFM sans modification de la fréquence de l'oscillateur et qui soit insensible aux variations de la largeur des données.

Le premier but est atteint par le fait que le procédé d'extraction d'un signal d'horloge synchrone à partir d'un signal FM codé en simple densité (c'est-à-dire modulé en fréquence), ou d'un signal MFM codé en double densité (c'est-à-dire à modulation de fréquence modifiée), la fréquence de modulation correspondant à l'intervalle de temps T séparant les impulsions les plus rapprochées du signal reçu, ce signal d'horloge synchrone constituant une fenêtre permettant à partir du signal modulé reçu d'extraire un signal de données, le procédé comprenant les étapes suivantes :

— détection des fronts montants du signal codé ;

— chargement d'un compteur binaire avec au moins une valeur, suite à la détection du front montant ;

— comptage des impulsions transmises par un oscillateur de fréquence dont le rapport avec la fréquence de modulation du signal codé est égal à la capacité N du compteur ; est caractérisé en ce que le chargement s'effectue à une valeur donnée (X) lorsque les impulsions de données sont distantes d'un multiple entier d'intervalles de temps T, tandis que le chargement s'effectue avec la valeur donnée (X) augmentée d'une valeur correspondant à la demie capacité du compteur lorsque les impulsions de données sont distantes d'un nombre fractionnaire d'intervalles de temps T et en ce que l'extraction du signal d'horloge synchrone produit selon le procédé s'effectue par prélèvement sur le bit de poids le plus fort du compteur.

Un autre but de l'invention est de proposer un dispositif permettant la mise en œuvre du procédé.

Ce but est atteint par le fait que le dispositif permettant la mise en œuvre du procédé est caractérisé en ce qu'il comprend un oscillateur délivrant un signal d'horloge à un compteur dont la capacité est égale au rapport de la fréquence de l'oscillateur sur la fréquence de modulation du signal codé, ce compteur étant préalablement chargé à une valeur déterminée $X$ lorsque les impulsions de données sont distantes d'un multiple entier d'intervalle de temps T, ou $X + N/2$ lorsque les impulsions de données sont distantes d'un nombre fractionnaire d'intervalles de temps T, un circuit de détection des fronts montants du signal codé dont la sortie est reliée à l'entrée de validation de chargement du compteur, la sortie de poids le plus élevé du compteur fournissant le signal d'horloge synchrone, est rebouclée sur l'entrée de chargement correspondante à ce point.

La description de la présente invention est faite ci-après en référence aux dessins annexés dans lesquels :

La figure 1 représente un mode de réalisation de l'invention ;

La figure 2 représente un circuit constituant l'état de la technique ;

La figure 3 représente les diagrammes temporels des différents signaux délivrés soit par le mode de réalisation de l'invention soit par l'état de la technique.

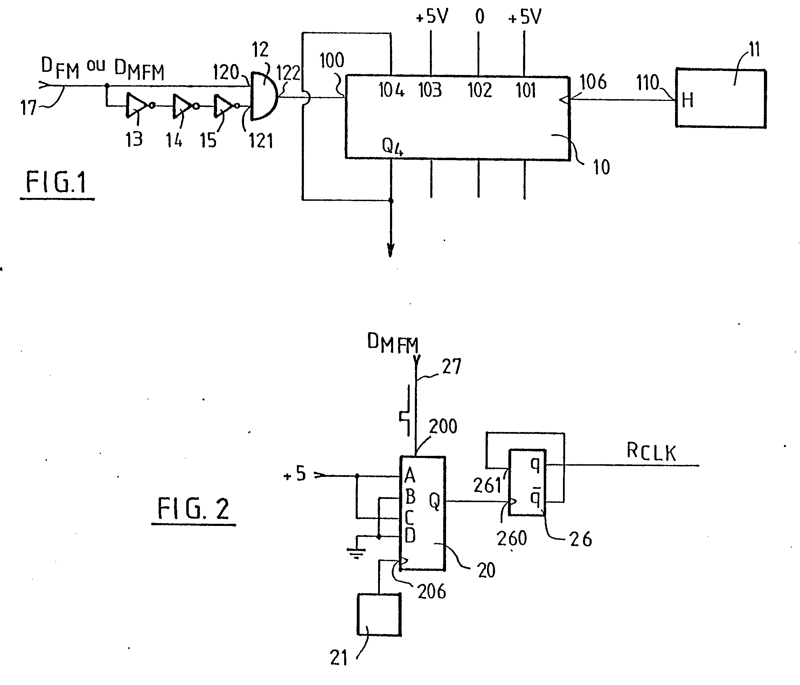

La figure 1 représente un mode de réalisation de l'invention dans lequel la liaison (17) reçoit un signal codé en simple densité (DFM) ou un signal codé en double densité (DMFM), ce signal codé provenant par exemple de la tête de lecture d'un disque souple. Ce signal codé est envoyé d'une part à l'entrée (120) d'une porte (12), et d'autre part à l'entrée d'un circuit inverseur, circuit inverseur constitué de trois inverseurs (13, 14 et 15) branchés en série. Ce circuit inverseur est relié à une deuxième entrée (121) de la porte ET (12). La sortie (122) de la porte ET (12) est reliée à l'entrée de commande de chargement (100) d'un compteur binaire (10). Ce compteur binaire (10) reçoit sur son entrée d'horloge (106), la sortie (110) d'un oscillateur (11) oscillant à une fréquence $F_H$ telle que $F_H = N.F$. N représente la capacité du compteur binaire, en l'occurrence 16 sur la figure 1, tandis que F représente la fréquence de modulation du signal codé reçu. Cette fréquence F correspond dans le cas d'un signal (MFM) à l'intervalle de temps (T) séparant des bits différents du signal binaire (DB, figure 3) non codé. L'entrée de chargement (101) de poids le plus faible et l'entrée de chargement (103) du compteur binaire (10) sont reliées à un potentiel de + 5 volts représentant un niveau logique « 1 ». L'entrée (102) de chargement est reliée à un potentiel de 0 volt et l'entrée de chargement (104) de poids le plus élevé reçoit la sortie Q4 du compteur, sortie qui correspond aux bits de poids le plus élevé. Les entrées de chargement (101) à (104) sont dans l'ordre croissant. Cette sortie délivre comme on le verra par la suite le signal $Q_{4FM}$ ou $Q_{4MFM}$ qui constitue le signal d'horloge synchrone du signal codé reçu.

Le circuit de la figure 2 représente l'état de la technique. Dans ce circuit la liaison (27) reçoit le signal codé et l'envoie sur l'entrée de chargement (200) d'un compteur binaire (20). Ce compteur binaire reçoit en (206) le signal d'horloge délivré par un oscillateur (21) de fréquence $F_H$. Les entrées de chargement (A et C) du compteur (20) sont reliées à un potentiel de + 5 volts représentant un niveau logique « 1 » tandis que les entrées de chargement (B et D) de ce compteur sont reliées à un potentiel de « 0 » volt représentant un niveau logique « 0 ». La sortie Q du compteur 20 correspondant aux bits de poids le plus élevé est envoyée sur l'entrée d'horloge (260) d'une bascule (26) de type D dont la sortie /q est reliée à l'entrée (261). La sortie q de cette bascule délivrant le signal RCLK.

Le fonctionnement de l'art antérieur sera expliqué en référence à la figure 3 qui représente les diagrammes temporels des différents signaux. Sur cette figure 3 on a représenté à la première ligne un signal DB (données binaires non codées) représentant les valeurs binaires correspondant au signal codé en double densité des données reçues. La ligne VDB (valeur des données binaires) permet d'indiquer que dans la cellule associée au bit 0 la valeur de la donnée correspond à un niveau logique 1, tandis que dans la cellule associée au bit 2 la valeur de la donnée binaire correspond à un niveau logique « 0 ». Les valeurs binaires du signal DB changent à des intervalles de temps T, correspondant à la fréquence de modulation.

Lorsque l'on code un signal binaire en modulation de fréquence (FM) ou en modulation de fréquence modifiée (MFM), les signaux codés fournissent soit l'impulsion d'horloge soit l'impulsion de données. Le code FM est souvent appelé signal codé en simple densité tandis que le code MFM est souvent appelé signal codé en double densité. Dans le code FM, représenté à la ligne indiquée par la référence $D_{FM}$, chaque intervalle de temps 2T attribué à un bit et correspondant à une cellule démarre avec une impulsion dite « d'horloge » (indiquée par c), puis l'impulsion de donnée indiquée par d sur la ligne $D_{FM}$, cette donnée d est à la valeur « 0 » ou « 1 », et se situe approximativement à mi-cellule. Pour un signal codé en MFM (double densité, représenté à la ligne indiquée $D_{MFM}$ sur la figure 3), l'impulsion dite d'horloge n'apparaît que si le bit de données est à zéro et encore à la condition qu'un zéro le précède déjà. Ceci est le cas entre les bits 2 et 3. Sur cette figure 3, T est l'intervalle de temps associé la fréquence de modulation F. La ligne référencée H sur la figure 3 représente le signal d'horloge dont la fréquence correspond à 16 fois la fréquence de modulation transmise en MFM ou FM. En effet, en FM l'intervalle de temps associé au bit 0 correspond à une durée de temps 2T. Cette valeur 16 correspond à la capacité du compteur (10) de la figure 1.

La ligne QD représente le signal délivré par la sortie (Q) du compteur de la figure 2 (figure représentant l'état de la technique). Le fonctionnement de cet état de la technique est le suivant. Lorsque le compteur (20) reçoit sur son entrée de chargement (200) un signal $D_{MFM}$ tel que celui représenté à la ligne correspondante sur la figure 3, l'apparition de l'impulsion du bit 0 va provoquer le chargement à 5 de ce compteur et le maintien à 5 de ce compteur pendant toute la durée de l'impulsion jusqu'au moment où, l'impulsion cessant, le compteur (20) va compter les impulsions de l'horloge (21) et ceci jusqu'à l'apparition de l'impulsion de données correspondant au bit 1. A ce moment là, le compteur va se charger à 5 et dès la fin de l'impulsion va se remettre à compter jusqu'au moment où apparaît l'impulsion d'horloge séparant le bit 2 du bit 3. A ce moment, comme on peut le voir sur le chronogramme de la ligne QD, le compteur passe de la valeur hexadécimale B à la valeur 5 et se maintient à 5 jusqu'à la fin de l'impulsion. On constate que l'apparition de cette impulsion a provoqué une modification de la période du signal QD, modification qui sera interprétée par les circuits de traitements du signal codé de données et du signal QD comme étant une erreur. Le circuit de traitement des signaux codés de données et du signal QD est bien connu de l'homme de métier et n'est pas représenté. Le compteur poursuit son évolution et à nouveau lors de l'apparition de l'impulsion de données associée au bit 4, sa sortie QD va passer de la valeur n exa décimale B à la valeur 5 pour ensuite reprendre le comptage normal dès la fin de l'impulsion. Cette impulsion de données correspondant au bit 4 provoque également une modification dans la période du signal QD. Cette modification sera également interprétée comme une erreur par les circuits de traitement du signal codé des données et du signal QD qui permet d'engendrer un signal d'horloge RCLK. Ce signal d'horloge RCKL constituant des fenêtres par rapport auxquelles les impulsions de données du signal codé doivent rester dans la même relation de phase, ce qui n'est pas le cas pour les bits 2, 3 et 4 du signal codé en double densité.

La ligne $Q_{4MFM}$ de la figure 3 représente l'évolution du signal délivré par la sortie (Q4) du compteur (10) de la figure 1, dans le cas où ce dernier reçoit un signal codé en double densité ($D_{MFM}$). Dans le cas de la figure 1 le circuit (12, 13, 14, 15) assure la détection des fronts montants des impulsions de données ou des impulsions d'horloge séparant des données, ces fronts montants permettant le chargement à une valeur donnée 5 (valeur choisie arbitrairement en fonction du centrage souhaité des données par rapport à la fenêtre constituée par le signal délivré par la sortie (Q4) du compteur (10). Dès l'apparition d'une impulsion correspondant à un front montant tel que celui associé à la donnée du bit 0 le compteur va être chargé à sa valeur donnée X (en l'occurrence 5) et se mettre à compter les impulsions d'horloge jusqu'au moment où apparaîtra une autre impulsion associée au front montant de l'impulsion du bit donné 1. Dans ce cas la valeur de chargement du compteur dépendra de la valeur précédente de la sortie (Q4). Si la sortie (Q4) était à zéro le compteur va se charger à 5 tandis que lorsque la valeur (Q4) était à « 1 » à l'impulsion d'horloge précédent l'apparition du front montant du signal codé $D_{MFM}$, le compteur se chargera à la valeur hexa-décimale D. Au démarrage on a supposé pour le bit 0 que la sortie (Q4) du compteur (10) était au niveau zéro, ce qui correspond à $Q_{4MFM}$. Dans le cas où l'on démarre avec 1 la sortie $Q_{4MFM}$ évolue de façon inverse à celle représentée sur la figure 3. Lorsque l'impulsion d'horloge séparant les bits 2 et 3 intervient dans le signal codé de données, cette impulsion d'horloge étant distante de l'impulsion de données associée au bit 1 d'un intervalle de temps égal à 3/2 T, le chargement du compteur va s'effectuer à la valeur hexa-décimale opposée à celle sur laquelle le chargement s'était effectué pour le bit 1 mais ceci ne va pas perturber la période du signal $Q_{4MFM}$. Par conséquent l'inconvénient de l'état de la technique ne se présentera pas. D'autre part, comme le chargement du compteur est provoqué par le front montant de l'impulsion de données (d) ou de l'impulsion dite « d'horloge » (c) cette synchronisation permet d'éliminer les effets non négligeables dus à la variation de la largeur des données, variation de largeur provenant de la lecture. Cette variation est de plus ou moins 20 % et équivalente dans le cas d'une application à un disque souple à une erreur sur la vitesse de rotation du disque plus ou moins 5 %. Ceci constitue donc un deuxième avantage de l'invention. A la ligne $Q_{4FM}$ on a représenté le signal de la sortie (Q4) du compteur de la figure 1 dans le cas où ce compteur reçoit un signal codé en simple densité $D_{FM}$ et dans le cas où la sortie $Q_4$ était au niveau zéro au démarrage. Si la sortie $Q_4$ était au niveau 1 au démarrage on obtient un signal $Q_{4FM}$

inversé. La sortie $Q_4$ délivre donc dans tous les cas, un signal d'horloge synchrone du signal codé $D_{FM}$, $D_{MFM}$.

## Revendications

1. Procédé d'extraction d'un signal d'horloge synchrone à partir d'un signal codé en simple ou double densité par une fréquence de modulation correspondant à l'intervalle de temps T séparant les impulsions les plus rapprochées du signal reçu, ce signal d'horloge synchrone constituant une fenêtre permettant à partir du signal codé reçu d'extraire un signal de données binaires, dont les valeurs ont des durées déterminées T ou 2T le procédé comprenant les étapes suivantes :
— détection des fronts montants du signal codé ;
— chargement d'un compteur binaire avec au moins une valeur donnée, suite à la détection d'un front montant ;
— comptage des impulsions transmises par un oscillateur de fréquence donnée dont le rapport avec la fréquence de modulation du signal codé est égal à la capacité N du compteur, est caractérisé en ce que l'étape de chargement s'effectue à une valeur donnée X lorsque les impulsions de données sont distantes d'un multiple entier d'intervalle de temps T, tandis que le chargement s'effectue avec la valeur donnée X augmentée d'une valeur correspondante à la demie capacité du compteur lorsque les impulsions de données sont distantes d'un nombre fractionnaire d'intervalles de temps T et en ce que l'extraction du signal d'horloge synchrone produit selon le procédé s'effectue par prélèvement sur le bit de poids le plus fort (Q4) du compteur.

2. Dispositif permettant la mise en œuvre du procédé selon la revendication 1 caractérisé en ce qu'il comprend un oscillateur (11) délivrant un signal d'horloge à un compteur (10) dont la capacité N est proportionnelle au rapport de la fréquence de l'oscillateur $F_H$ sur la fréquence F de modulation du signal codé, ce compteur étant préalablement chargé à une valeur déterminée X lorsque les impulsions de données sont distantes d'un multiple entier d'intervalle de temps, T ou X + N/2 lorsque les impulsions de données sont distantes d'un nombre fractionnaire d'intervalles de temps T, un circuit (12 à 15) de détection des fronts montants du signal codé dont la sortie est reliée à l'entrée (100) de validation de chargement du compteur, la sortie (Q4) de poids le plus élevé du compteur fournissant le signal d'horloge synchrone dans le cas d'un signal codé est rebouclée sur l'entrée de chargement correspondante à ce poids.

## Claims

1. A method of extracting a synchronous clock signal from a signal coded in single or double density by a modulation frequency corresponding to the time interval T separating the closest pulses of the signal received, this synchronous clock signal forming a window permitting extraction from the received coded signal of a binary data signal, the values of which have determined periods T or 2T, the method comprising the following steps :

— detecting the rising fronts of the coded signal ;

— charging a binary counter with at least one determined value following the detection of a rising front ;

— counting the pulses transmitted by an oscillator of given frequency the ratio of which with the modulation frequency of the coded signal is equal to the capacity N of the counter, is characterised in that the charging step is effected at a given value X when the data pulses are spaced apart by a whole multiple of the time interval T, whereas the charging is effected with the given value X incremented by a value corresponding to half the counter capacity when the data pulses are spaced apart by a fractional number of time intervals T and in that the extraction of the synchronous clock signal produced according to the method is effected by sampling on the bit of greatest weight (Q4) of the counter.

2. Apparatus for carrying out the method according to claim 1, characterised in that it comprises an oscillator (11) supplying a clock signal to a counter (10) the capacity N of which is proportional to the ratio of the oscillator frequency $F_{11}$ over the modulation frequency F of the coded signal, this counter being first charged at a determined value X when the data pulses are spaced apart by a whole multiple of time interval T, or X + N/2 when the data pulses are spaced apart by a fractional number of time intervals T, a circuit (12 to 15) for detection of the rising fronts of the coded signal the output of which is connected to the input (100) for validating the charging of the counter, the heaviest weight output (Q4) of the counter supplying the synchronous clock signal in the case of a coded signal being looped back to the charging input corresponding to this weight.

**Patentansprüche**

1. Verfahren zur Gewinnung eines synchronen Taktsignals ausgehend von einem mit einfacher oder doppelter Dichte mit einer Modulationsfrequenz kodiertem Signal, die dem Zeitraum T entspricht, der die einander am engsten benachbarten Impulse des empfangenen Signals trennt, wobei dieses synchrone Taktsignal ein Fenster bildet, das es ermöglicht, ausgehend von dem kodierten Signal ein Signal mit binären Daten zu gewinnen, dessen Werte eine bestimmte Dauer T bzw. 2T haben, wobei das Verfahren die folgenden Schritte umfaßt :

— Erfassung der Anstiegsflanken des kodierten Signals ;

— Laden eines binären Zählwerks mit wenigstens einem bestimmten Wert im Anschluß an die Erfassung einer Anstiegsflanke ;

— Zählen der Impulse, die ein Oszillator mit bestimmter Frequenz abgibt, deren Verhältnis zu der Modulationsfrequenz des kodierten Signals gleich der Kapazität N des Zählwerkes ist, dadurch gekennzeichnet, daß der Schritt des Ladens mit einem bestimmten Wert X erfolgt, wenn die Datenimpulse durch ein ganzzahliges Vielfaches des Zeitintervalls T beabstandet sind, während das Laden mit dem bestimmten Wert X vergrößert um einen der halben Kapazität des Zählwerkes entsprechenden Wert erfolgt, wenn die Datenimpulse um eine gebrochene Zahl von Zeitintervallen T beabstandet sind, und daß die Gewinnung des gemäß dem Verfahren erzeugten synchronen Taktsignals durch Abgreifen der höchstwertigen Bit (Q4) des Zählwerkes erfolgt.

2. Vorrichtung, die die Durchführung des Verfahrens nach Anspruch 1 ermöglicht, dadurch gekennzeichnet, daß sie einen Oszillator (11) umfaßt, der einem Zählwerk (10) ein Taktsignal liefert, wobei die Kapazität N des Zählwerkes zu dem Verhältnis zwischen der Frequenz des Oszillators $F_H$ und der Modulationsfrequenz F des kodierten Signals proportional ist, wobei dieses Zählwerk vorher mit einem bestimmten Wert X, wenn die Datenimpulse um ein ganzzahliges Vielfaches eines Zeitintervalls T beabstandet sind, oder X + N/2 geladen wird, wenn sie mit einer gebrochenen Zahl von Zeitintervallen T beabstandet sind, und daß sie eine Schaltung (12 bis 15) zur Erfassung der Anstiegsflanken des kodierten Signals umfaßt, deren Ausgang mit dem Eingang (100) zur Freigabe des Ladens des Zählwerkes verbunden ist, wobei der höchstwertige Ausgang (Q4) des Zählwerkes, der das synchrone Taktsignal im Falle eines kodierten Signals abgibt, auf den dieser Wichtung entsprechenden Eingang zurückgeschleift ist.

EP 0 196 255 B1

$D_{FM}$ ou $D_{MFM}$

120  12  122  100

+5V  0  +5V

104  103  102  101  106  110  H  11

13  14  15  121

Q4

10

17

FIG.1

FIG. 2

$D_{MFM}$  27

200

+5  A  B  Q  261  q  q̄  RCLK

C  260  26

D

206

20

21

FIG.3